# EUROPEAN PATENT SPECIFICATION

(11) **EP 2 254 839 B1**
(45) Date of publication and mention of the grant of the patent: **16.07.2014**
(21) Application number: 09714394.5
(22) Date of filing: 27.02.2009
(51) Int. Cl.: C02F 1/32, C02F 1/48

(54) **DEVICE AND METHOD FOR DISINFECTING A FLUID**
VORRICHTUNG UND VERFAHREN ZUM DESINFIZIEREN EINES FLUIDS
DISPOSITIF ET PROCÉDÉ POUR DÉSINFECTER UN FLUIDE

(30) Priority: 27.02.2008 NL 1035089
(43) Date of publication of application: 01.12.2010
(73) Proprietor: Pure Green Technologies B.V., 8934 CJ Leeuwarden (NL)
(72) Inventor: MAYER, Mateo, Jozef, Jacques, NL-3811 BJ Amersfoort (NL); OUDAKKER, Gerrit, NL-1721 DC Broek Op Langedijk (NL); EUVERINK, Gerrit, Jan, Willem, NL-9752 NE Haren (NL)
(74) Representative: Verdijck, Gerardus
(86) International application number: PCT/NL2009/000049
(87) International publication number: WO 2009/108045

(56) References cited:
- WO-A-2004/045756
- WO-A-2006/134567
- JP-A- 2000 317 473
- JP-A- 2001 191 068
- JP-A- 2004 159 723
- US-A1- 2006 131 246
- US-B1- 6 579 495

## Description

According to a first aspect, the present invention relates to a device for disinfecting a fluid, for instance water.

According to a second aspect, the invention relates to a method for disinfecting a fluid, for instance water.

Disinfection is an important process in the production of drinking water. Since the production of drinking water is a bulk process, disinfection requires a relatively large amount of chemicals or energy. For this reason it is of great social and economic importance to develop water treatment methods with which it is possible to disinfect water in sustainable manner. It is further of social importance to develop robust, decentral water treatment methods which can be applied in remote areas or in emergency situations in order to make water fit for human consumption. There are also situations in which it is important to disinfect a biologically contaminated fluid (for instance a waste water flow or a gas flow from a ventilating duct of a hospital or a microbiological laboratory) before it is discharged into the environment.

Water disinfection using ultraviolet light is a per se known method (see for instance US6303086 B1). A persistent problem in this method is the fact that the ultraviolet light has a very low penetration depth into the water, particularly if absorbing particles are present therein. It is therefore advantageous to make the distance between the UV source and a unit of volume of the water for treating as short as possible.

Another known principle for disinfecting water makes use of an electrode pair with a direct voltage therebetween. Due to the direct voltage between the electrodes electrolysis occurs in the water for treating. The radicals released at the anode have a disinfecting effect. This technique has for instance been described by Bergman et al. (Chemical Engineering Journal, Volume 85, Issues 2-3, 28 January 2002, Pages 111-117). Due to the high degree of reactivity of the radical species, it is also advantageous in this application to have the shortest possible distance between the radical-forming anode and a unit of volume of the water for treatment.

Yet another principle with which a disinfecting effect can be achieved is based on the use of an alternating electric field with a frequency in the order of magnitude of 100 kHz. It is known from the literature (see for instance Shuehiro et al., Sensors and actuators B96 (2003) 144-151) that the cell membrane of micro-organisms becomes permeable if the micro-organism is exposed to such an alternating voltage and that the organism dies with a correct combination of frequency of the alternating voltage, amplitude of the alternating voltage and duration of exposure. It is also advantageous in this application to have the shortest possible distance between the electrodes and a unit of volume of the water for treatment.

Other examples of disinfection devices for fluids are given by the documents WO2004/045756, WO2006/134567 and JP2004/59726.

The present invention enables disinfection of a fluid, for instance water, using one or more of the above stated principles with a solution which can be applied on both large and small scale. Further advantages of a number of embodiments of the invention are a robust, low-maintenance embodiment.

In the invention UV light and/or other electromagnetic disinfecting means, such as direct voltage electrodes or alternating voltage electrodes, can be carried deep into the fluid, for instance water. This takes place by making use of UV light sources and/or direct voltage electrodes and/or alternating voltage electrodes with small-scale dimensions as disinfecting means. Owing to these small-scale dimensions of the disinfecting means it is possible to obtain a packing, for instance a packed bed (including a fluidized bed) or a packed string with disinfecting means. In such a packing the distance between the disinfecting means and the units of volume of the fluid for treating can be kept short.

According to a first aspect, the invention therefore relates to a device for disinfecting a fluid, comprising a container for containing a fluid, with at least one inlet for introducing the fluid for disinfecting into the container and at least one outlet for removing disinfected fluid, and further a number of disinfecting units placed in the container and comprising an electrically driven disinfecting means selected from UV light sources, direct voltage electrodes or alternating voltage electrodes, or a combination thereof. The device is characterized in that the disinfecting units are packed in the volume of the container. The volume of the container is here preferably taken up particularly by disinfecting units.

The fluid which is being disinfected is for instance a liquid, for instance water, at room temperature but can alternatively be a gas. The invention is suitable for disinfecting surface water, spring water or groundwater, for instance for the purpose of making it (more) suitable as drinking water for human or veterinary use. Process water from the beer industry, waste water or a gas flow from a ventilation system for hospitals, waste water or a gas flow from a ventilation system from the bio-industry, or sewage water can also be disinfected using the invention in order to.reduce the biological impact on the environment when it is discharged.

The device and the material of the container can be established in simple manner by the skilled person. Of sole importance is that the container is suitable for containing the fluid and the disinfecting units.

The container comprises at least one inlet and at least one outlet for respectively introducing the fluid for disinfecting into the container and removing disinfected fluid from the container. Within the scope of this description 'at least one' is understood to mean one or more, such as a multiple, i.e. two or more, each time it is used. It must be understood that in determined embodiments one or more inlets can also serve as outlet, and vice versa. This is for instance the case when a batch embodiment is used. In other embodiments it is however recommended that inlets and outlets are separated (for instance in a continuous embodiment).

Within the scope of the present invention 'disinfection' is understood to mean a reduction of the number of surviving micro-organisms, including viruses, single-cell animals and plants. The reduction is preferably to a level which is accepted in the EU for drinking water intended for veterinary and preferably human use. Also included here is the assuring of this microbial quality of the treated fluid. In other embodiments the reduction is to a level which permits discharge into the environment.

The number of disinfecting units comprises a disinfecting means selected from UV sources, direct voltage electrodes or alternating voltage electrodes, or a combination thereof.

Owing to recent technological developments in the field of semiconductor technology, LEDs are commercially available which produce light in the UV range below 300 nm. Application of these UV-LEDs in combination with the technology according to the present invention offers promising possibilities for disinfection. UV-LED technology has the great advantage relative to classic UV lamps that the light output is much higher or, in other words, that the amount of emitted UV light per Watt of electrical power is very high. In addition, the lifespan of UV-LEDs is much longer than that of classic UV lamps, and UV-LEDs are not shock-sensitive. Due to their small dimensions and impact resistance UV-LEDs are also suitable for packing in for instance a packed bed, including a fluidized bed. It is also possible to manufacture a string of UV-LEDs which can be packed in the volume of the container. The packing of UV-LEDs in the volume of the reactor, for instance in a packed bed or by making use of a string of UV-LEDs, creates a large light-emitting area. The power emitted by the UV-LEDs is hereby utilized optimally since the penetration depth of UV light into water is limited. UV-LED technology further has the great advantage relative to classic UV lamps that the light output is much greater or, in other words, that the amount of emitted UV light per Watt of electrical power is very high. In addition, the lifespan of UV-LEDs is much longer than that of classic UV lamps, and UV-LEDs are not shock-sensitive.

Instead of a UV radiation source as disinfecting means, an alternating electric field can also be applied for disinfection with the technology according to the present invention. Use is made here of a pair of alternating voltage electrodes. An alternating voltage of 10 Hz-100 Ghz, such as 70-150 kHz, for instance in the order of 100 kHz, is applied over these electrodes. Within the scope of the present invention frequencies within this range also comprise radio waves with a carrier wave modulated by amplitude modulation and/or frequency modulation and/or single sideband modulation. It is known that the cell membrane of micro-organisms become permeable if the micro-organism is exposed to such an alternating voltage, and that the organism dies at a correct combination of frequency of the alternating voltage, amplitude of the alternating voltage and duration of exposure.

Instead of UV radiation or an alternating voltage, it is also possible using the present invention to apply a direct voltage for disinfection purposes. In this latter application a direct voltage is applied over two electrodes. Owing to the direct voltage over the electrodes electrolysis will occur in the water for treatment, and the radicals and/or other reactive species (inter alia for instance hydroxide and chlorine species) released at the anode will provide for disinfection.

According to the present invention of the disinfecting device, each disinfecting unit comprises an electrical conductor suitable for generating an induction voltage in an alternating electric and/or an alternating magnetic field (including a radio wave) and a disinfecting means electrically connected to the electrical conductor. The disinfecting means is selected from a UV light source, a number of direct voltage electrodes, a number of alternating voltage electrodes. The disinfecting device optionally further comprises additional electrical switching components electrically connected to the electrical conductor and the disinfecting means, and an optional housing for the electrical conductor, the disinfecting means and the further optional electrical switching components. The device further comprises means for generating an alternating electromagnetic field suitable for generating an induction voltage in the electrical conductor of the disinfecting units. The electrical conductor is preferably an electrically conductive wire wound in coil form, and is more preferably an electrically conductive wire wound round a metal core, such as a ferrite core.

It is known that electrical energy can be transferred by means of induction from an electrical circuit A to another electrical circuit B while these electrical circuits are galvanically separated. A typical application in current practice is for instance a type of electric toothbrush in which a coil is arranged in the watertight housing of the toothbrush. A second coil is arranged in a likewise watertight housing, and the toothbrush is charged by energy transfer from the charger coil to the receiver coil.

In the present invention energy is transferred from a primary circuit to preferably a large number of secondary circuits situated in a fluid using an alternating electric field and/or an alternating magnetic field. The primary circuit and the secondary circuits are galvanically separated. In a preferred embodiment the secondary circuits form a packed bed, including a fluidized bed of for instance spherically formed particles (for instance marbles). A secondary circuit is here present in each marble. Each secondary circuit can be constructed from an electrical conductor, preferably embodied as coil, optionally equipped with a metal core, for instance a ferrite core, which is connected to an electromagnetic disinfecting means (for instance a single UV-LED or two UV-LEDs in anti-parallel connection). It is hereby possible to control a large collection of disinfecting means, for instance UV-LEDs, from the primary circuit.

By now applying a number of secondary circuits equipped with UV-LEDs in the form of a fluidized bed it is possible to disinfect water in a robust, sustainable and highly effective manner. A significant additional advantage involved in the use of a fluidized bed is that the particles of which the fluidized bed consists collide with each other. As a result of these collisions there occurs a small measure of erosion, whereby the light-emitting surface of the LEDs does not become contaminated. Contamination of the UV radiation-emitting surface is a significant drawback of classic UV lamps.

It will be apparent to the skilled person that a packed bed, including a fluidized bed, is one of the many embodiments of the technology according to the present invention. Several of the alternative embodiments are stirred systems, pulsed systems and systems with a packed bed which is stirred up from time to time.

Instead of UV radiation as disinfecting element it is also possible with the technology according to the present invention to apply an alternating electric field for disinfection purposes. Two electrodes which are in contact with the liquid are connected for this purpose to a secondary circuit. This is possible for instance by connecting the coil of the secondary circuit to two electrodes. By now applying in the primary circuit an alternating voltage with a frequency of 10 Hz-100 Ghz, such as 70-150 kHz, for instance in the order of 100 kHz, an alternating voltage of a similar frequency results in each secondary circuit between the two electrodes. It is known that the cell membrane of micro-organisms becomes permeable if the micro-organism is exposed to such an alternating voltage, and that the organism will die at a correct combination of frequency of the alternating voltage, amplitude of the alternating voltage and duration of exposure. Within the scope of the present invention frequencies within the stated range also comprise radio waves with a carrier wave modulated by amplitude modulation and/or frequency modulation and/or single sideband modulation.

Instead of UV radiation or an alternating voltage at a frequency in the order of magnitude of 100 kHz, it is also possible with the present invention to apply a direct voltage for disinfection purposes. In his latter application the coil of a secondary circuit is connected in series to a diode or a bridge rectifier and for instance a capacitor. A direct voltage is generated in this way. The capacitor is connected to two direct voltage electrodes. Due to the direct voltage over the electrodes electrolysis begins to occur in the water for treatment, and the radicals and/or other reactive particles released at the anode provide for disinfection.

It will be apparent to the skilled person that the secondary circuit can be embodied in the form of a fluidizable bed of particles by applying miniature components. It will also be apparent to the skilled person that application of the present technology in order to bring about electrolysis on particle scale in a fluidized bed makes demands in respect of the form of the particles and the positioning of the electrodes. These demands in respect of form and positioning of the electrodes are imposed on the one hand by flow engineering preconditions for keeping the bed of particles fluidized and on the other by the precondition that, when the particles collide, no short-circuiting may occur due to discharge of the capacitors in the colliding particles, since this results in energy loss. Configurations which meet these requirements are for instance porous, spherical particles with an electrode on the inside and an electrode on the outside. This configuration reduces the chance of the electrodes of two or more colliding particles making contact with each other in a manner such that discharge of the capacitors of the individual particles occurs. Particles specially designed for applying the new form of fluid bed electrolysis described here expressly form part of the present invention. Such particles for instance also comprise hollow cylindrical particles wherein the electrodes, for instance direct voltage electrodes or alternating voltage electrodes, are placed within the housing periphery. Mutual contact between electrodes of different disinfecting units is hereby largely prevented. When a cylindrical form is used, the cylinder jacket can be used advantageously for the purpose of winding a coil around it. The cylinder jacket can here be formed from a metal such as ferrite. The electrodes can also be placed within the jacket periphery while being electrically insulated from the jacket. The jacket can have a diameter of 10 µm to 1 cm, such as from 100 µm to 0.5 cm, or 500 µm to 0.1 cm. The length of the cylinder jacket can be within the same order of magnitude, wherein it is recommended that the length is greater than the diameter. The length is for instance 2-5, such as 3-4 times the diameter.

A number of inert particles (dummy particles) without electrodes can also be applied in a packed bed, including a fluidized bed, in a quantity of 10-70%, such as 30-50%, preferably 30-40% of the total of the particles in the bed. The mutual contact between the disinfecting units with electrodes is hereby reduced, thereby limiting contact between electrodes. In the case of combined use of disinfecting units with electrodes and disinfecting units with UV-LEDs, the LED-comprising particles will have a comparable effect to that of dummy particles.

Concerning the process conditions in which the primary circuit is operated, it is noted that the frequency and amplitude of an alternating voltage placed on a primary coil depends on the application and can vary between 1 Hz and 100 GHz, such as for instance 20-1000, 50-800, 100-500, 200-400 Hz, 20-1000, 50-800, 100-500, 200-400 kHz, 1-80, 10-70, 20-60, 30-50 GHz.

According to a preferred embodiment of the device, the disinfecting units have a mass/volume displacement of 0.1-3, preferably 0.1-2.2 g/cm³, such as 0.4-1.2 or 0.5-1.1 or 0.6-1.0 or 0.7-1.0 or 0.8-1.0 or 0.9-1.0 g/cm³. These values of the mass/volume displacement make the disinfecting units suitable for packing as fluidized bed in the volume of the container when a fluid is used which is gaseous or is an aqueous liquid at room temperature.

According to a further preferred embodiment of the device according to the invention, the means for generating the alternating electromagnetic field comprise an electromagnetic transmitter and/or a number of electromagnets, the field strength of which is variable, and/or a number of permanent magnets (including electromagnets) which are movable relative to the disinfecting units, and/or means for allowing the disinfecting means to move relative to static permanent magnets (including electromagnets), for instance by making use of a changing flow speed of the fluid in a fluidized bed, and combinations thereof. When an electromagnetic transmitter or electromagnets are used, electrical energy can be used to generate the induction voltage in the electrical conductor. When permanent magnets are used, mechanical energy can be used to generate the induction voltage in the electrical conductor. The mechanical energy can for instance be produced by muscle power, for instance by means of shaking or by means of driving a rotatable shaft, wind power or water power, for instance by means of driving a rotatable shaft.

Irrespective of the manner in which the alternating electric field and/or the alternating magnetic field (including the radio wave) is generated, the coils in the secondary unit are adapted in a number of embodiments for the purpose of collecting the energy emitted by the primary circuit.

According to a further preferred embodiment of the device according to the invention, the disinfecting units are mutually connected in a number of networks, such as a number of one-dimensional networks, a number of two-dimensional networks and/or a number of three-dimensional networks. One-dimensional networks here comprise strings. Two and three-dimensional networks for instance comprise wire meshes and multi-layer wire meshes with transverse connections.

According to a further aspect, the invention relates to the disinfecting unit used in the device according to the invention. The disinfecting unit comprises an electrical conductor suitable for generating an induction voltage in an alternating electric and/or magnetic field, and a disinfecting means which is electrically connected to the electrical conductor, electrically driven and selected from a UV light source, a number of electrolytic electrodes, a number of alternating voltage electrodes and further optionally additional electrical switching components electrically connected to the electrical conductor and the disinfecting means and an optional housing for the electrical conductor, the disinfecting means and the further optional electrical switching components. Preferred embodiments of the disinfecting unit are stated in the subclaims and have already been discussed with reference to the device for disinfecting a fluid according to the invention.

A further aspect of the present invention relates to a method for disinfecting a fluid, for instance water, such as surface water. Using a water treatment method according to the invention it is possible to disinfect water in both a bulk water production process and in a decentral water treatment. With the present invention the choice of scale for the decentral water treatment technology can be so small that water can be made suitable for human consumption with a manually driven disinfecting apparatus. It is advantageous here that the lifespan of the disinfecting apparatus can be exceptionally long with a proper selection of the applied components, and the investment costs for the disinfecting apparatus can remain particularly low.

According to a further aspect, the invention relates to a device comprising a substantially plate-like body having on one side a number of photovoltaic cells and on the other side a number of disinfecting units comprising a number of disinfecting means electrically connected to the photovoltaic cells and selected from UV light sources, electrolytic capacitors or alternating voltage electrodes, or a combination thereof, and wherein the mass/volume displacement of the device is smaller than that of water. This device can also be used to disinfect water.

It will be apparent to the skilled person that the use of the invention offers unprecedented possibilities of applying disinfection in sustainable manner without chemicals. And that, although all the above described concepts relate particularly to the disinfection of drinking water, the invention can be applied more widely. The same embodiments can for instance also be applied for many types of other photochemical, photo-bacteriological and electrochemical processes. As example can be referred to the formation of radicals in a colloidal mixture of water with titanium dioxide.

The invention is now further elucidated on the basis of the following embodiment and the accompanying figures, which show non-limitative exemplary embodiments of the invention.

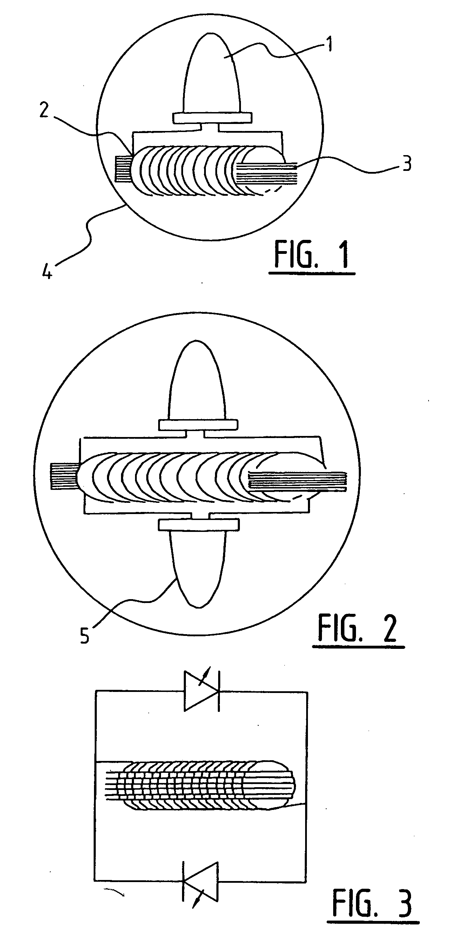

The basic idea of the invention is that the UV light is carried deep into the water. This takes place in an embodiment using a small, transparent marble in which at least one UV-LED is arranged. The LED is electrically connected to a coil which is wound round a ferrite core. This is shown schematically in figure 1, wherein (1) designates the UV-LED, connected to a coil (2) wound round a ferrite core (3), while the whole is cast in a UV-resistant and UV-permeable synthetic resin (4), shown here in the form of a marble.

Figure 2 shows an extra UV-LED (5) which is connected in opposite direction to LED (1). The described light marble is provided with energy by means of an alternating magnetic field or a radio wave. Due to said opposite connection the one LED is provided with energy during the plus phase and the other in the minus phase.

This is shown schematically in Figure 3. The light marble is assembled such that the weight by volume is equal to that of water.

Because the described LED marbles are so small, they have a relatively large surface area. This large surface area is favourable for entry of the UV light into the water.

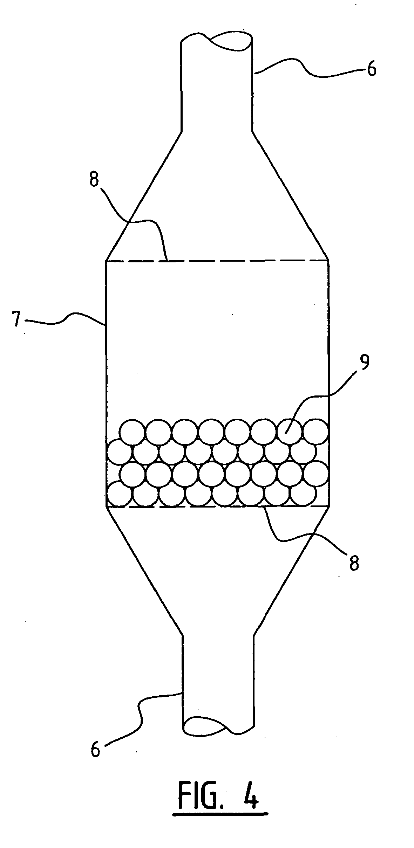

Figure 4 shows the container where the light marbles are located. The water supply pipe (6) widens gradually up to a widened portion (7) closed on both sides with a grid (8) in order to contain the light marbles (9). The part of container (7) consists of plastic, while grids (8) are embodied in metal.

Figure 5 shows the situation in which the water begins to flow (10). Light marbles (11) begin to float as in a fluidized bed, and the water flows along the light marbles. A very large internal surface area is thus created.

In order to provide the light marbles with energy so that UV light results, an extra housing (12) is arranged round the container, the outer side and covers of this housing being embodied in metal, while the covers are electrically connected to grids (8). A Faraday cage is hereby created. A radio wave which provides the light marbles with energy is generated in housing (12). Because of the Faraday cage the signal remains limited to the space where the energy is required.

An alternative method of providing the light marbles with energy is to apply an alternating magnetic field in space (12). This is possible by means of electricity, but also by means of a number of rotating permanent magnets.

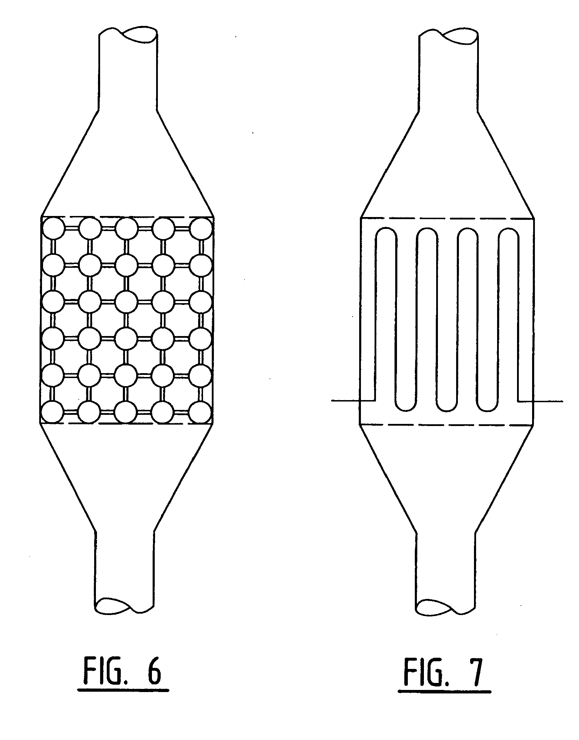

Figure 6 shows a variant of the above described fluid bed method. As alternative, the LEDs can be arranged in a fixed matrix so that a labyrinth results through which the water can flow.

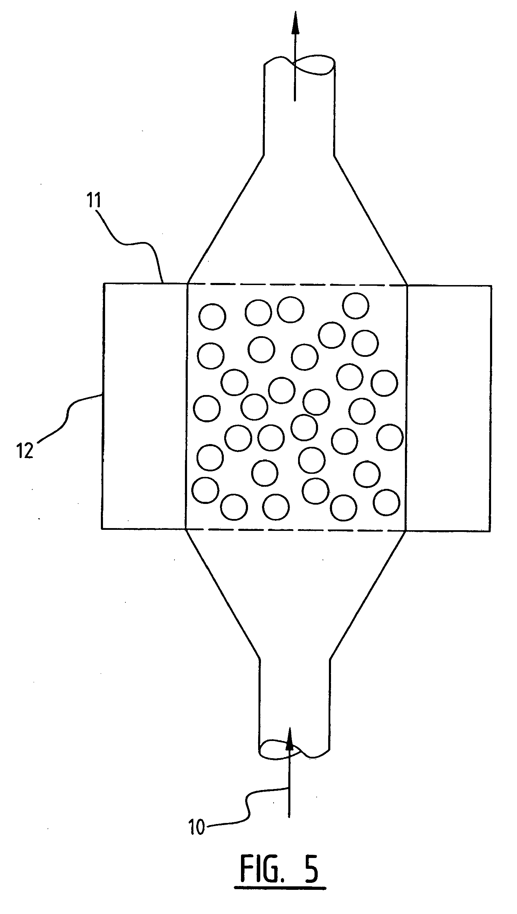

Figure 7 shows another possible alternative in which an LED strip is rolled up in a determined manner or is internally crumpled, whereby a labyrinth is also created. In the solution indicated in figures 6 and 7 the energy supply can be the same as for the solution in figure 5, although it is also possible to make a normal electrical connection by means of wires inserted through the wall.

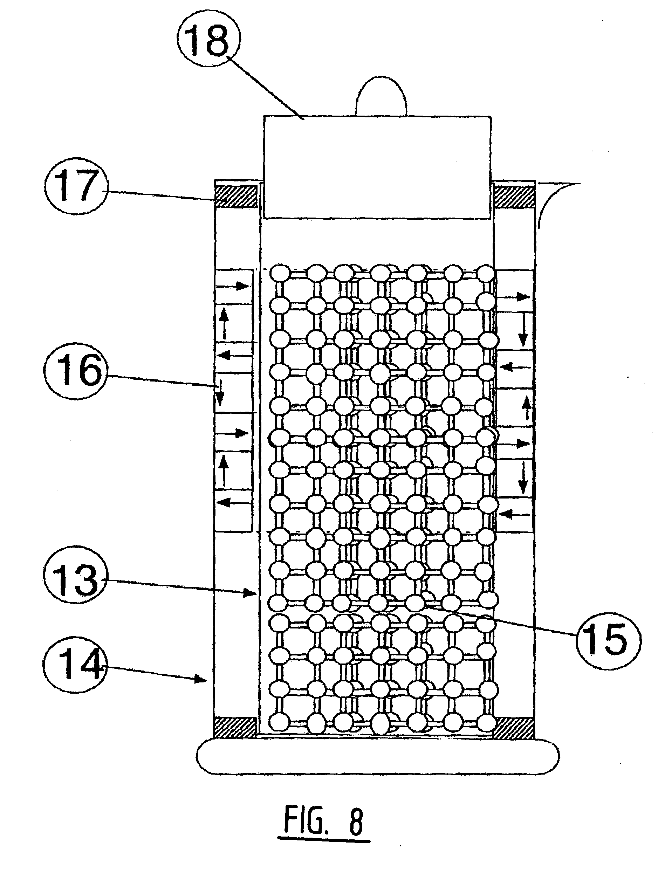

Figure 8 shows a small-scale application consisting of an inner canister (13) and an outer canister (14). The inner canister is filled with a matrix of fixed light marbles (15) as specified in figure 6. In the space between the inner canister and the outer canister a magnet configuration (16) is slidably arranged which can be moved up and downward and thus induces a current in the light marbles. At the top and bottom of the annular space between the inner and outer canister is arranged a rubber block with the function of shock absorber. The inner canister is sealed watertightly by means of a cover. Not shown is a safety provision which ensures that the canister can only be shaken when the cover is on, this in order to prevent people from looking into the UV radiation.

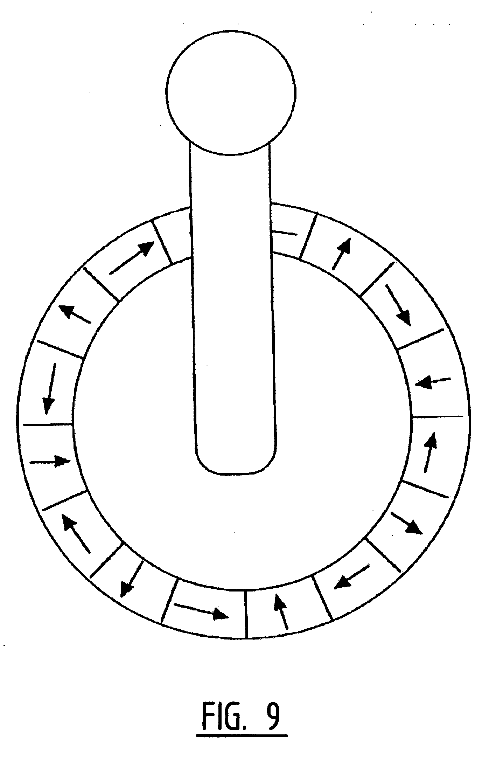

As alternative to the manual shaker, figure 9 shows a magnet configuration which is driven in the manner of a manual coffee grinder. The magnet configuration rotates in the space between the inner and the outer canisters. Rotation can only take place when the lid is on the canister.

Where mention has been made in the above of the fluid bed light marbles or the matrix and the rolled-up LED strip, it is also possible to envisage the light blocks of a form which, even with the densest conceivable packing, still gives sufficient throughflow. It is hereby no longer necessary to make the light blocks weight-neutral. For the optimal form of the light blocks reference can be made to breakwater elements such as dolosse, akmons and tetrapods. Although these are units applied in the large-scale world of harbour works, the principle of a high permeability is the same, only the scale is different.

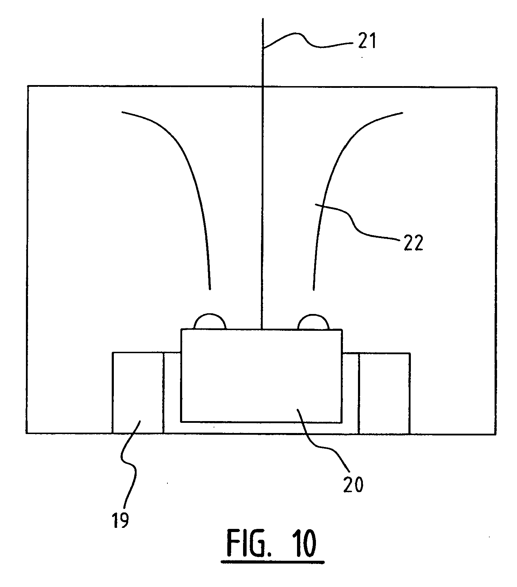

Figure 10 shows schematically a solution for disinfection of a drinking water tank where rotation is available, for instance from a wind turbine, water power, an (electric) motor or manpower. Rotor (20) consisting of a number UV-LEDs with integrated coil with ferrite core rotates inside stator (19) consisting of permanent magnets. The rotor is set into a rotating movement via shaft (21), whereby the UV-LEDs are illuminated and provide for disinfection. Due to the design of the rotor and the internal guiding (22) the water will begin to circulate internally and, in the course of time, all the water will pass over the UV-LEDs at least once and be disinfected.

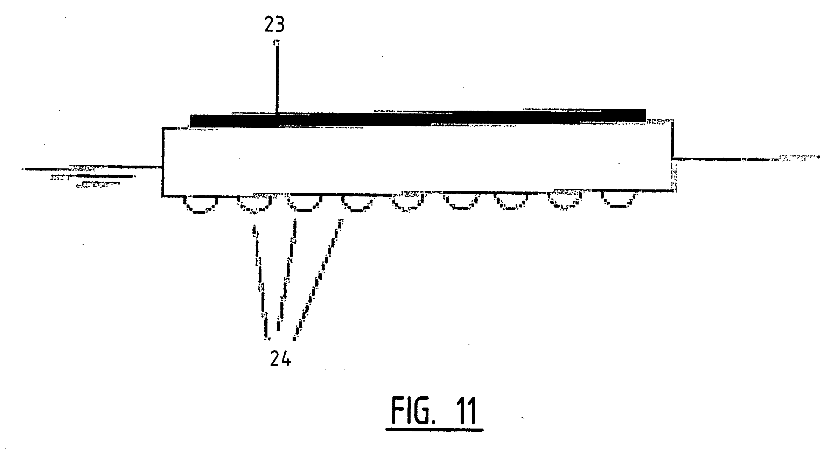

Figure 11 shows schematically a photovoltaic panel (23) provided on the underside with UV-LEDs (24). The whole is embodied such that it is self-buoyant. It can be laid in the water as panel and automatically provides a cleaning action of for instance stagnant water. Where the sun normally provides for heating and thereby for rich bacteria growth in stagnant water, the sun is used in this configuration for disinfection. There are no moving parts, everything is solid-state and there is therefore hardly any maintenance.

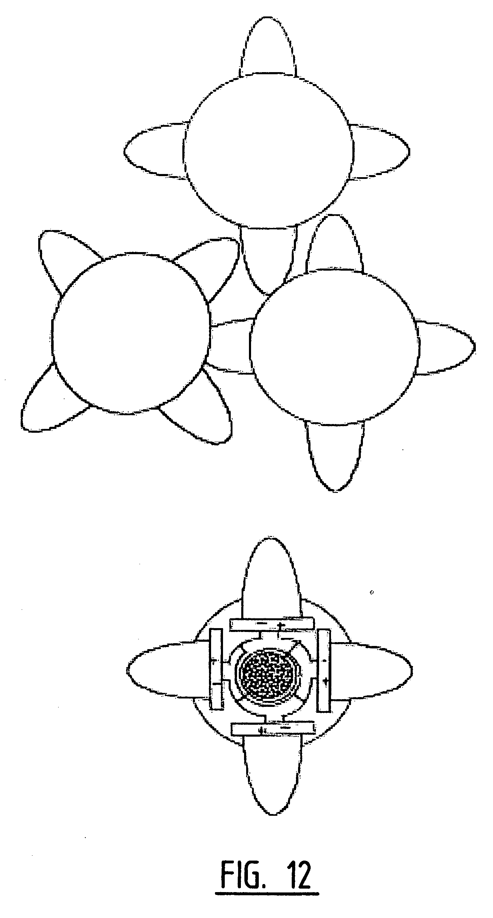

Figure 12 shows a further alternative embodiment of the disinfecting unit according to the invention. This embodiment has multiple UV-LEDs which protrude partially from the housing.

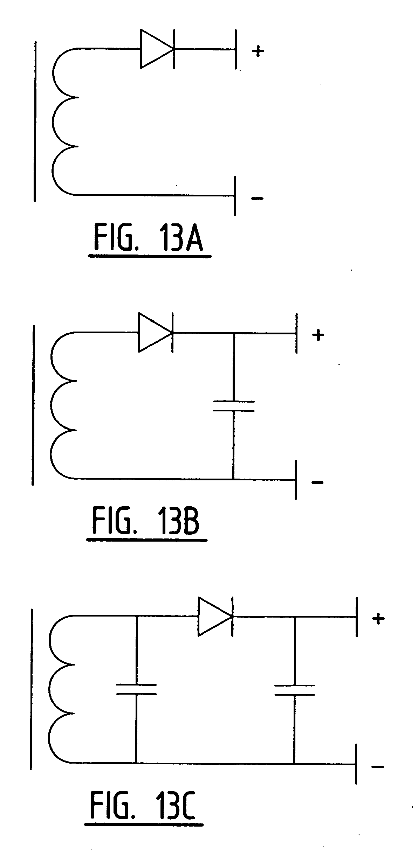

Figures 13a-13c show a number of circuits which can be applied in the disinfecting units according to the invention in which use is made of direct voltage electrodes. The use of a core in the coil is advantageous but not essential. The circuit of figure 1c is a circuit analogous to a crystal receiver.

### Example

Wound round a PVC cylinder with a diameter of 4 cm and a height of 5 cm is a primary coil with 12 windings of 0.8 mm enamelled copper wire. The primary coil is connected to a class A-connected end stage of a transmitter powered by a Colpitts oscillator operating at 7 MHz. The secondary circuit consists of a coil with 18 windings of 0.7 mm enamelled copper wire on a ferrite core with a diameter of 4 mm and a length of 18 mm. The properties of the ferrite core are such that the inductance of the coil amounts to 5.8 µH. The coil in the secondary circuit is connected to a 5 mm LED and placed in the PVC cylinder. The cylinder is then filled with water. After turning on the transmitter the LED in the secondary circuit is found to light up brightly and, depending on the position of the secondary circuit relative to the primary coil, the LED burns more brightly or less brightly. It will be apparent to the skilled person that the conditions applied in this example are far from optimal and that optimization of the primary circuit, the secondary circuit, the applied frequency and adjustment of the primary circuit to the secondary circuit is possible. The example does however show clearly that the technology according to the present invention can be applied in practice and that the dimensions of a secondary circuit are sufficiently small to realize a fluidized bed of secondary circuits in the water for treatment.

In another preferred embodiment the technology of the present invention is applied for the purpose of removing ions from a liquid by means of capacitive deionization. For this purpose a packed or fluidized bed of individual particles is applied, each comprising two electrodes with a very large specific surface area. Such electrodes can for instance be manufactured from active carbon. Each individual particle further preferably comprises a coil, one or more diodes and optionally a capacitor. By making use of induction each individual particle is provided with current and, since this is a direct current because of the applied diodes, both electrodes will receive a charge, with the result that the electrodes are charged with ions from the liquid. In this way unwanted ions can be removed from a liquid while there is a very intensive contact between liquid and electrode surface. Owing to the use of a fluidized bed of particles the system is not susceptible to contamination, and liquids which would result in clogging in classic systems for capacitive deionization can also be treated. Another positive effect resulting from application of electrodes with a large specific surface area in combination with the present invention is that traces of undesirable or toxic organic components adsorb to the electrode surface. If the choice of the voltage applied to the primary induction coil, which activates the individual particles, is so high that electrolysis also occurs at the electrodes with large specific surface area, radicals are formed on the electrode surface which then react with the traces of organic components adsorbed to the surface. It is hereby possible to remove traces of organic contaminants in energy-efficient manner despite the fact that the concentration of these substances in the reaction mixture and the concentration of radicals in the reaction mixture are both low.

In another preferred embodiment the technology according to the present invention is applied in combination with LEDs which emit light in the visible range. In this manner a reactor for culturing algae or other organisms with photosynthesis is obtained with a very high production speed per unit of volume of water. Since the wavelength of the light emitted by the LEDs can further also be adjusted to the optimal wavelength for growth of the algae or other organisms with photosynthesis, the present technology combines a high production speed per unit of volume of water with a high energy efficiency. It is further noted that the mechanical strength of LEDs is very great compared to other lamps, such as incandescent lamps, fluorescent lamps, and the lifespan is considerably longer. It will be apparent to the skilled person that an algae reactor according to the technology of the present invention can further also be combined with capacitive deionization, disinfection and electrolysis according to the present invention. This is possible in simple manner by mixing the LED particles with particles for capacitive deionization, disinfection and electrolysis. By applying such combinations it is possible to influence the composition of the water in which the algae grow, i.e. the content of dissolved ions and/or the nature and concentration of micro-organisms that are present. As non-limitative example it is mentioned that, by temporarily setting the composition of the water at a desired level just before the harvest of the algae, a greater purity of the algae, and thus a superior product quality, is obtained relative to classic processes. It will further be apparent to the skilled person that a packed bed with a network of LEDs, which are provided with energy by means of classic electricity wires instead of by induction, is an efficient lighting technology. Such a packed bed of LEDs can also be combined with an optionally fluidized bed of small particles which, optionally via induction, remove and/or disinfect and/or electrolyse ions dissolved according to the present invention. Such configurations expressly form part of the present invention.

## Claims

1. Device for disinfecting a fluid, comprising:
- a container (7) for containing a fluid, with at least one inlet for introducing the fluid for disinfecting and at least one outlet for removing disinfected fluid;
- means for generating an alternating electric field and/or alternating magnetic field as a primary circuit; and
- a number of disinfecting units,
**characterized in that** the disinfecting units are packed in the volume of the container, and each disinfecting unit comprises an electrical conductor (2) as a secondary unit suitable for generating an induction voltage in the alternating electric field and/or alternating magnetic field with the disinfecting means which is electrically connected to the electrical conductor and selected from a UV light source, a number of direct voltage electrodes, for applying a direct voltage such that electrolysis occurs releasing radicals and/or other reactive species, a number of alternating voltage electrodes for applying an alternating voltage of 10Hz - 100 GHz such that cell membranes of micro-organisms become permeable, or a combination thereof, such that an induction voltage in the electrical conductor of the disinfecting units can be generated by transfer of energy from the primary circuit to the number of secondary circuits.

2. device as claimed in claim 1, wherein the electrical conductor is an electrically conductive wire wound in coil form (2).

3. Device as claimed in claim 2, wherein the electrically conductive wire is wound round a ferrite core (3).

4. Device as claimed in either of the claims 1, 2 or 3, wherein the disinfecting means is selected as a UV light source (1).

5. Device as claimed in any of the claims 1-4, wherein the disinfecting means is selected as a direct voltage electrode pair.

6. Device as claimed in any of the claims 1-5, further comprising electrical switching components connected to the electrical conductor and the disinfecting means.

7. Device as claimed in claim 6, wherein the electrical switching components comprise a bridge rectifier or a diode.

8. Device as claimed in any of the claims 1-7, further comprising a housing (4) for the electrical conductor, the disinfecting means and/or the optional electrical switching components.

9. Device as claimed in any of the claims 1-8, wherein the disinfecting units have a mass/volume displacement of 0.1-1.2 g/cm3, such as 0.4-1.2 or 0.5-1.1 or 0.6-1.0 or 0.7-1.0 or 0.8-1.0 or 0.9-1.0 g/cm3.

10. Device as claimed in any of the claims 1-9, wherein the means for generating the alternating electromagnetic field comprises an electromagnetic transmitter and/or a number of permanent magnets which are movable relative to the disinfecting units.

11. Device as claimed in any of the claims 1-10, wherein the disinfecting units are mutually connected in a number of networks, such as a number of one-dimensional networks, a number of two-dimensional networks and/or a number of three-dimensional networks.

12. Method for disinfecting a fluid, comprising of:
(i) providing a device as claimed in any of the claims 1-11;
(ii) introducing the fluid for disinfecting 5 into the container via the inlet;
(iii)generating the alternating electromagnetic field;
(iv) removing disinfected fluid from the container via the outlet.

13. Method as claimed in claim 12, wherein the fluid for disinfecting is chosen from the group of water, such as surface water, spring water or groundwater, process water from the beer industry, waste water or sewage water, or a gas flow from a ventilation system for hospitals, or from a ventilation system from the bioindustry.

## Patentansprüche

1. Vorrichtung zum Desinfizieren einer Flüssigkeit, umfassend:
- ein Behältnis (7) zum Aufnehmen einer Flüssigkeit, mit wenigstens einem Einlass zum Einführen der Flüssigkeit zum Desinfizieren und wenigstens einem Auslass zum Entfernen desinfizierter Flüssigkeit;
- Mittel zum Erzeugen eines elektrischen Wechselfelds und/oder eines magnetischen Wechselfelds als einen Primärkreis; und
- eine Anzahl von desinfizierenden Bauteilen,
**dadurch gekennzeichnet, dass** die desinfizierenden Bauteile im Volumen des Behältnisses angeordnet sind, und jedes desinfizierende Bauteil umfasst einen elektrischen Leiter (2) als ein Sekundärbauteil, geeignet zum Erzeugen einer Induktionsspannung in dem elektrischen Wechselfeld und/oder dem magnetischen Wechselfeld, mit dem desinfizierenden Mittel, welches elektrisch mit dem elektrischen Leiter (2) verbunden ist und aus einer UV-Lichtquelle ausgewählt ist, eine Anzahl von Gleichspannungselektroden zum Anlegen einer Gleichspannung, so dass eine Elektrolyse erfolgt, welche Radikale und/oder andere reaktive Spezies freisetzt, eine Anzahl von Wechselspannungselektroden zum Anlegen einer Wechselspannung von 10Hz-100GHz, so dass Zellmembranen von Mikroorganismen durchlässig werden, oder eine Kombination davon, so dass eine Induktionsspannung in dem elektrischen Leiter der desinfizierenden Bauteile durch Energietransfer vom Primärkreis zu der Anzahl von Sekundärkreisen erzeugt werden kann.

2. Vorrichtung nach Anspruch 1, wobei der elektrische Leiter ein elektrisch leitender Draht ist, der in Spulenform (2) gewickelt ist.

3. Vorrichtung nach Anspruch 2, wobei der elektrisch leitende Draht um einen Eisenkern (3) gewickelt ist.

4. Vorrichtung nach einem der Ansprüche 1, 2 oder 3, wobei das desinfizierende Mittel als eine UV-Lichtquelle (1) ausgewählt ist.

5. Vorrichtung nach einem der Ansprüche 1-4, wobei das desinfizierende Mittel als ein Gleichspannungselektrodenpaar ausgewählt ist.

6. Vorrichtung nach einem der Ansprüche 1-5, weiterhin umfassend elektrische Schaltkomponenten, die mit dem elektrischen Leiter und dem desinfizierenden Mittel verbunden sind.

7. Vorrichtung nach Anspruch 6, wobei die elektrischen Schaltkomponenten einen Brücken-Gleichrichter oder eine Diode umfassen.

8. Vorrichtung nach einem der Ansprüche 1-7, weiterhin umfassend ein Gehäuse (4) für den elektrischen Leiter, das desinfizierende Mittel und/oder die optionalen elektrischen Schaltkomponenten.

9. Vorrichtung nach einem der Ansprüche 1-8, wobei die desinfizierenden Bauteile eine Massen/Volumen-Verdrängung von 0.1-1.2 g/cm³ aufweisen, beispielsweise 0.4-1.2 oder 0.5-1.1 oder 0.6-1.0 oder 0.7-1.0 oder 0.8-1.0 oder 0.9-1.0 g/cm³.

10. Vorrichtung nach einem der Ansprüche 1-9, wobei das Mittel zum Erzeugen eines elektromagnetischen Wechselfelds einen elektromagnetischen Transmitter und/oder eine Anzahl von Permanentmagneten, welche relativ zu der desinfizierenden Einheit beweglich sind, umfasst.

11. Vorrichtung nach einem der Ansprüche 1-10, wobei die desinfizierenden Bauteile gegenseitig in einer Anzahl von Netzwerken verbunden sind, wie beispielsweise einer Anzahl von eindimensionalen Netzwerken, einer Anzahl von zweidimensionalen Netzwerken und/oder einer Anzahl von dreidimensionalen Netzwerken.

12. Verfahren zum Desinfizieren einer Flüssigkeit, umfassend:
i. Bereitstellen einer Vorrichtung nach einem der Ansprüche 1-11;
ii. Einführen der zu Flüssigkeit zum Desinfizieren 5 in das Behältnis über den Einlass;
iii. Erzeugen des elektromagnetischen Wechselfelds;
iv. Entfernen desinfizierter Flüssigkeit aus dem Behältnis über den Auslass.

13. Verfahren nach Anspruch 12, wobei die Flüssigkeit zum Desinfizieren aus einer Gruppe von Wasser ausgewählt wird, wie beispielsweise Oberflächenwasser, Quellwasser oder Grundwasser, Brauchwasser aus der Bierindustrie, Schmutzwasser, Abwasser, oder einem Gasstrom aus einem Belüftungssystem für Krankenhäuser, oder aus einem Gasstrom aus einem Belüftungssystem für die Bioindustrie.

## Revendications

1. Dispositif destiné à désinfecter un fluide, comprenant :
- un contenant (7) destiné à contenir un fluide, doté d'au moins un orifice d'entrée destiné à introduire le fluide à désinfecter, et d'au moins un orifice de sortie destiné à retirer le fluide désinfecté ;
- des moyens destinés à générer un champ électrique alternatif et/ou un champ magnétique alternatif en tant que circuit primaire ; et
- un certain nombre d'unités de désinfection ;
**caractérisé en ce que** les unités de désinfection sont incorporées dans le volume du contenant, et chaque unité de désinfection comprend un conducteur électrique (2) en tant qu'unité secondaire appropriée à la génération d'une tension d'induction dans le champ électrique alternatif et/ou dans le champ magnétique alternatif avec les moyens de désinfection qui sont connectés de manière électrique au conducteur électrique et qui sont sélectionnés parmi une source de lumière UV, un certain nombre d'électrodes à tension continue, de façon à appliquer une tension continue de telle sorte qu'une électrolyse se produise en libérant des radicaux et/ou toutes autres espèces réactives, un certain nombre d'électrodes à tension alternative, de façon à appliquer une tension alternative de fréquence comprise entre 10 Hz et 100 GHz de telle sorte que les membranes cellulaires de micro-organismes deviennent perméables, ou une combinaison de celles-ci, de telle sorte qu'une tension d'induction dans le conducteur électrique des unités de désinfection puisse être générée par un transfert d'énergie à partir du circuit primaire vers les circuits secondaires.

2. Dispositif selon la revendication 1, dans lequel le conducteur électrique est un fil conducteur de manière électrique enroulé sous la forme d'une bobine (2).

3. Dispositif selon la revendication 2, dans lequel le fil conducteur de manière électrique est enroulé autour d'un noyau de ferrite (3).

4. Dispositif selon l'une des revendications 1, 2 ou 3, dans lequel les moyens de désinfection sont sélectionnés comme étant une source de lumière UV (1).

5. Dispositif selon l'une quelconque des revendications 1 à 4, dans lequel les moyens de désinfection sont sélectionnés comme étant une paire d'électrodes à tension continue.

6. Dispositif selon l'une quelconque des revendications 1 à 5, comprenant en outre des composants de commutation électrique connectés au conducteur électrique et aux moyens de désinfection.

7. Dispositif selon la revendication 6, dans lequel les composants de commutation électrique comprennent un redresseur en pont ou une diode.

8. Dispositif selon l'une quelconque des revendications 1 à 7, comprenant en outre un logement (4) destiné à recevoir le conducteur électrique, les moyens de désinfection et/ou les composants de commutation électrique optionnels.

9. Dispositif selon l'une quelconque des revendications 1 à 8, dans lequel les unités de désinfection présentent un déplacement de masse/volume compris entre 0,1 g/cm³ et 1,2 g/cm³, par exemple entre 0,4 g/cm³ et 1,2 g/cm³ ou entre 0,5 g/cm³ et 1,1 g/cm³ ou entre 0,6 g/cm³ et 1,0 g/cm³ ou entre 0,7 g/cm³ et 1,0 g/cm³ ou entre 0,8 g/cm³ et 1,0 g/cm³ ou entre 0,9 g/cm³ et 1,0 g/cm³.

10. Dispositif selon l'une quelconque des revendications 1 à 9, dans lequel les moyens destinés à générer le champ électromagnétique alternatif comprennent un émetteur électromagnétique et/ou un certain nombre d'aimants permanents qui sont mobiles par rapport aux unités de désinfection.

11. Dispositif selon l'une quelconque des revendications 1 à 10, dans lequel les unités de désinfection sont connectées de manière mutuelle en un certain nombre de réseaux, tel qu'un certain nombre de réseaux unidimensionnels, un certain nombre de réseaux bidimensionnels et/ou un certain nombre de réseaux tridimensionnels.

12. Procédé destiné à désinfecter un fluide, comprenant les étapes consistant à :
(i) fournir un dispositif selon l'une quelconque des revendications 1 à 11;
(ii) introduire le fluide à désinfecter dans le contenant par l'intermédiaire de l'orifice d'entrée ;
(iii) générer le champ électromagnétique alternatif ;
(iv) retirer le fluide désinfecté du contenant par l'intermédiaire de l'orifice de sortie.

13. Procédé selon la revendication 12, dans lequel le fluide à désinfecter est choisi dans le groupe constitué de l'eau, telle que de l'eau de surface, de l'eau de source ou de l'eau souterraine, de l'eau de traitement en provenance de l'industrie de la bière, des eaux usées ou de l'eau résiduaire, ou un flux de gaz en provenance de systèmes de ventilation d'hôpitaux, ou de systèmes de ventilation de bio-industries.
